# EUROPEAN PATENT APPLICATION

(11) **EP 3 544 133 A1**
(43) Date of publication of application: **25.09.2019**
(21) Application number: 18163688.7
(22) Date of filing: 23.03.2018
(51) Int. Cl.: H02G 5/06

(54) **SUPPORTING INSULATOR AND MANUFACTURING METHOD THEREFOR**

(71) Applicant: ABB Schweiz AG, 5400 Baden (CH)
(72) Inventor: Korbel, Jakub, 5400 Baden (CH); Sykes, Thomas, 8006 Zürich (CH); Elser, Pierre, 8005 Zürich (CH); Blumenroth, Falk, 79761 Waldshut-Tiengen (DE); Straumann, Ulrich, 8404 Winterthur (CH)
(74) Representative: Zimmermann & Partner Patentanwälte mbB

(57) **Abstract**

A supporting insulator (100) has an insulator body (10) and at least one conductor fitting (20) for applying a high voltage thereto. The conductor fitting (20) passes through the insulator in an axial direction (Z) whereby a contact area (C) between the insulator body (10) and the conductor fitting (20) is formed. The insulator body (10) comprises a notch (11A, 11B) abutting on the contact area (C); and the conductor fitting (20) comprises an adjacent notch (21A, 21B) abutting on the contact area (C). The notches (11A, 21A; 11B, 21B) form a pair of stress relief means for alleviating even those stresses stemming from a temperature difference.

## Description

### TECHNICAL FIELD

The present disclosure relates to a supporting insulator, such as a high voltage barrier insulator that can be used in a gas insulated switchgear, and to a manufacturing method for a supporting insulator.

### BACKGROUND ART

A supporting insulator, such as a barrier insulator in a gas insulated switchgear, electrically insulates a conductor from a different electrical potential, e. g. another conductor in the switchgear or a housing of the switchgear. Conventional support insulators comprise an insulator body made of an insulating material, and an inner conductor.

It is well-known to obtain a supporting insulator having high-voltage insulating properties by casting a suitable insulating material, such as a curable epoxy resin, wherein the insulating material forms the insulator body of the supporting insulator. As the inner conductor, a conductor fitting or conductor insert is cast-in inside the insulator body. Upon installation of the ready-made supporting insulator at the site, e. g. in a gas insulated switchgear, a switchgear conductor is connected to the conductor fitting. During operation, a high voltage is applied to the cast-in conductor fitting.

Since the conductor fitting is surrounded by the insulating material in a close connection during the casting process, a contact area or interface area between the insulating material of the insulator body and a contact surface of the conductor fitting is formed, wherein the insulating material and the conductor fitting are in close contact with each other. In an actual use environment, such as in a gas insulated switchgear, mechanical loads stemming e.g. from a difference in gas pressure on both sides of the insulator lead to a stress acting also on the contact area between the insulating material and the conductor fitting, such as a pressure stress or a bending stress.

EP0676842B1 discloses a supporting insulator having a molded insulator body and a cast-in fitting wherein a groove is present in the insulating material. In this conventional supporting insulator, pressure stresses or bending stresses acting on the contact surface between the insulating material and the conductor fitting can be alleviated.

However, since the conductor fitting is made of an electrically conducting material, such as aluminum, it exhibits mechanical properties that differ from those of the material used for the insulator body. One mechanical property that may adversely affect the reliability of a supporting insulator having a cast-in conductor fitting is the difference in thermal expansion coefficients. When the supporting insulator is subjected to different temperatures, the difference in thermal expansion coefficients between the fitting and the body may lead to thermal stresses.

It has been found that stresses due to a temperature change in the conventional supporting insulator known from EP0676842B1 having the groove in the insulator body are still high, which may lead to a reduced reliability. There is a need for supporting insulators having reduced stresses also when they are subjected to different temperatures.

### SUMMARY

According to an aspect of the present disclosure, a supporting insulator is provided. The supporting insulator comprises an insulator body and at least one conductor fitting. A high voltage is applicable to the at least one conductor fitting. The conductor fitting passes through the insulator in an axial direction of the conductor fitting, whereby a contact area is formed in which the insulator body and the conductor fitting are in contact with each other. The insulator body comprises a notch abutting on the contact area. The conductor fitting further comprises an adjacent notch abutting on the contact area.

In this aspect, the notch in the insulator body and the notch in the conductor fitting form a pair of notches, the pair of notches typically acting as stress relieve means against stresses, in particular against stresses that act primarily in the radial direction of the insulator.

A supporting insulator is for example a barrier insulator, such as a barrier insulator in a gas insulated switchgear. High voltage, as used herein, typically comprises voltages of more than 10 kV, e. g. voltages in the range of several hundreds of kilovolts.

In the case of multiple conductor fittings inside a single insulator body, such as in multi-phase applications, the pair of notches is typically provided at the contact area of each of the conductor fittings.

Typically, the conductor fitting is a cast-in fitting, i. e. a fitting or armature that is inserted into a casting mold prior to filling the casting material. The conductor fitting is made of any suitable conducting material, e. g. from aluminum. As the insulating material, any suitable and castable material can be used. Typically, the insulating material is a resin material, such as an epoxy resin.

A notch, as used herein, is typically a concave recess of generally arbitrary shape, such as a concave recess that has a cross section, in a plane perpendicular to an extension direction of the concave recess, having one of a semi-circular shape, an oval shape, a rectangular shape, a rectangular shape with rounded corners, a triangular shape, or a triangular shape with rounded corners. The respective shapes of the notch in the insulator body and the notch in the conductor fitting may be the same, or they may be different from each other.

A notch, as used herein, typically has a lip part or tongue part; in that case, the respective lip part is the part that abuts on the contact area. Typically, the lip part of the notch in the insulator body and the lip part of the notch in the conductor fitting abut on each other, forming a lip-to-lip contact region in the contact area.

In the present embodiment a notch in one of the different materials used for the insulator body and the conductor fitting is provided adjacent to another notch in the respective other material. The notches being adjacent to one another and having the contact area therebetween form the pair of notches-

It has been found that by providing the pair of notches, not only bending stresses and/or pressure stresses, but also stresses typically occurring in different temperature environments can be alleviated.

In embodiments, the supporting insulator is in the form of a disc, in the form of a cone, or in the form of a bell. The disc-shaped or cone-shaped or bell-shaped insulator may be used as a barrier insulator, e. g. in a gas insulated switchgear. The base surfaces of the insulator may separate a first gas volume in the gas insulated switchgear from a second gas volume. Typically, both the insulator body and the conductor insert have a substantially round cylindrical shape. Further typically, both the notch in the insulator body and the notch in the conductor fitting are provided around the entire circumference of the disc.

Note that the shape of the supporting insulator need not necessarily be symmetrical in any plane perpendicular to the axis, and a fixation plane of the supporting insulator need not necessarily be identical to a conductor plane in which the conductor fitting is passed through.

In embodiments, the notch of the insulator body runs from an axially outer side of the supporting insulator (from an axially outer surface of the insulator body) substantially in the axial direction. The adjacent notch of the conductor fitting runs from the axially outer side of the supporting insulator (from an axially outer surface of the conductor fitting) substantially in the axial direction. The axially outer side of a disc-shaped supporting insulator is defined as the outer surface of the respective disc base (e. g., cylinder base). Running in the axial direction, or depth direction, as used herein, means that the respective notch is recessed in the direction from the axially outer side towards an inside of the insulator body or the conductor fitting, respectively.

The axially outer side of a supporting insulator in which the fixation plane of the supporting insulator and the conductor plane are not identical to one another is defined as an outer surface, or external-side surface, of the insulator body base in the protrusion direction from the fixation plane.

In embodiments, the notch of the insulator body runs from an axially inner side of the supporting insulator (from an axially inner surface of the insulator body) substantially in the axial direction. The adjacent notch of the conductor fitting runs from the axially inner side of the supporting insulator (from an axially inner surface of the conductor fitting) substantially in the axial direction. The axially inner side of a supporting insulator in which the fixation plane of the supporting insulator and the conductor plane are not identical to one another is defined as an inner surface, or inner-side surface, of the insulator body base in the protrusion direction from the fixation plane.

In embodiments, the supporting insulator comprises a pair of notches on the axially outer side of the insulator body, and it comprises a pair of notches on the axially inner side of the insulator body. Typically, the supporting insulator comprises a pair of notches on each axially outer side of the insulator body, and it comprises a pair of notches on each axially inner side of the insulator body.

In embodiments, a notch is provided on each axially outer side of the insulator body, and a notch is provided on each axially outer side of the conductor fitting. A typical disc-shaped supporting insulator has two axially outer sides (the base surfaces of the disc), each facing one of the gas volumes in an installed state within a gas insulated switchgear.

In embodiments, the supporting insulator comprises a pair of notches either on the axially outer side or on the axially inner side. In this embodiment, the supporting insulator further comprises an additional notch on the respective axial opposite side provided either in the insulator body or in the conductor fitting. For example, in the case that a pair of notches is provided on the axially outer side, a single (un-paired) notch is additionally provided on the axially inner side, either in the conductor fitting or in the insulator body. Likewise, in the case that a pair of notches is provided on the axially inner side, a single (un-paired) notch is additionally provided on the axially outer side, either in the conductor fitting or in the insulator body.

In embodiments, the depth of at least one of the notches is at least 2 mm. Typically, the depth of at least one of the notches is at least 3 mm or at least 10 mm. In typical embodiments, the depth of each notch corresponding to a pair of neighboring notches is at least 2 mm, typically at least 3 mm or at least 10 mm. In further typical embodiments, the depth of each notch is at least 2 mm, typically at least 3 mm or at least 10 mm.

Depth, as used herein, is the distance from the surface (e. g. the axial surface) from which the respective notch originates up to its deepest point, when measured in a direction substantially perpendicular to the surface in the region where the notch is arranged. For example, the depth of any of the notches does not exceed 10% or 20% of the total thickness of the respective part that it is provided in, the total thickness of the respective part corresponding to a distance from one surface (e. g. axial surface) to the opposite surface (e. g., opposite axial surface) in the region of the part where the notch is arranged.

In embodiments, at least one of the notches is arranged at a distance of 5 mm or less, typically 3 mm or less, from the contact area. In other words: The notch is arranged in the vicinity of the contact area. Typically, the notch has some residual material, e. g. of 1 mm or more, in the part that abuts on the contact area. In typical embodiments, a lip part or tongue part of the respective notch that abuts on the contact area has a thickness of at most 5 mm, whereby the notch distance of 5 mm or less is achieved. The distance can be defined as a shortest distance from the respective axial surface to a part of the notch having half of the notch depth.

In embodiments, the notch arranged at a distance of 5 mm or less from the contact area has an adjacent notch for forming the pair of notches, the adjacent notch also being arranged at a distance of 5 mm or less from the contact area.

According to a further aspect of the disclosure, a manufacturing method of a supporting insulator is provided. The method comprises providing a casting mold, wherein the casting mold comprises a casting portion to be filled with an insulation material during the casting process, an insertion portion for accommodating a conductor fitting in the casting process, and a casting protrusion abutting on the insertion portion. A conductor fitting is arranged in the casting mold, wherein the conductor fitting comprises a notch abutting on the casting portion. The conductor fitting is arranged such that its notch is adjacent to the casting protrusion provided in the casting mold. The casting portion is filled with the insulation material, and the insulation material is cured.

The casting protrusion forms a notch in the insulator body during the casting process. The notch in the insulator body then is adjacent to the notch in the conductor fitting, for forming a pair of notches. The casting protrusion may be shaped such as to form a lip part or tongue part of the resulting notch that abuts on the contact area, such that some residual material (e. g. of 1 mm or more) that forms the lip abuts on the contact area.

With the aspects, features and embodiments described herein, a supporting insulator may be obtained which has reduced stress in the contact area between the in-cast conductor fitting and the insulator body. At the same time, a known and well-tested design of an insulator body can be supplemented with an in-cast conductor fitting having a notch in the vicinity of the contact area, reducing the stress in the contact area and essentially not influencing or adversely affecting the dielectric characteristics of the insulator body.

### BRIEF DESCRIPTION OF THE DRAWINGS

Embodiments of the present disclosure will be described with reference to the accompanying drawings in which:
Fig. 1 is a schematic sectional view of a supporting insulator according to an embodiment;
Fig. 2 is a schematic perspective view of the supporting insulator of Fig. 1;
Fig. 3 is a partial sectional view of a notch region of a supporting insulator according to an embodiment;
Figs. 4a-4e are schematic sectional views of notch regions having different shapes, in a supporting insulator according to an embodiment;
Fig. 5 is a schematic sectional view of a spherical, or bell-shaped, insulator according to an embodiment;
Fig. 6 is a schematic sectional view of a conical insulator according to an embodiment, having a pair of notches each on an axially outer side and an axially inner side;
Fig. 7 is a schematic sectional view of a conical insulator according to an embodiment, having a pair of notches only on an axially outer side;
Fig. 8 is a schematic sectional view of a conical insulator according to an embodiment, having a pair of notches on an axially outer side, and an un-paired notch in an insulator body on the axially inner side;
Fig. 9 is a schematic sectional view of a conical insulator according to an embodiment, having a pair of notches on an axially outer side, and an un-paired notch in a conductor fitting on the axially inner side; and
Fig. 10 is a schematic perspective view of a three-leg insulator for a gas insulated line.

### DESCRIPTION OF EMBODIMENTS

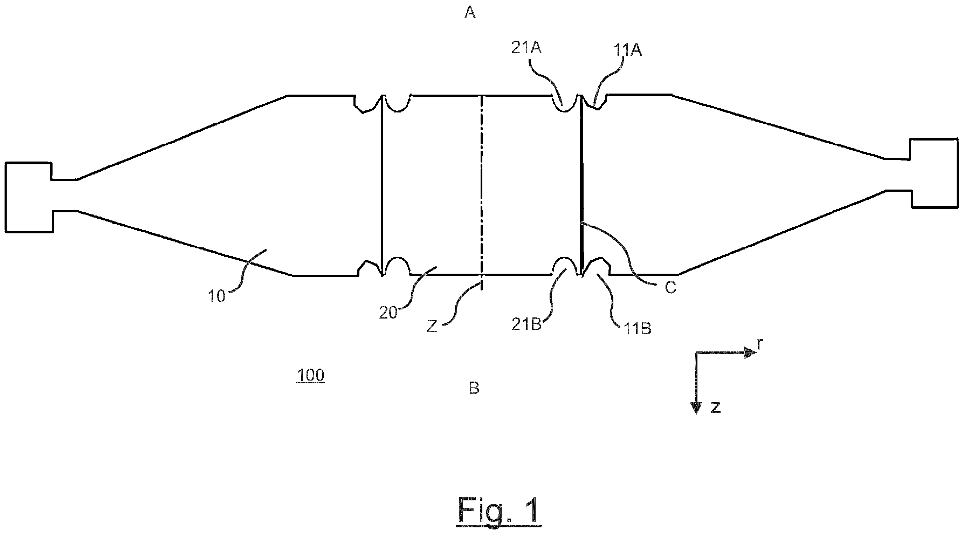

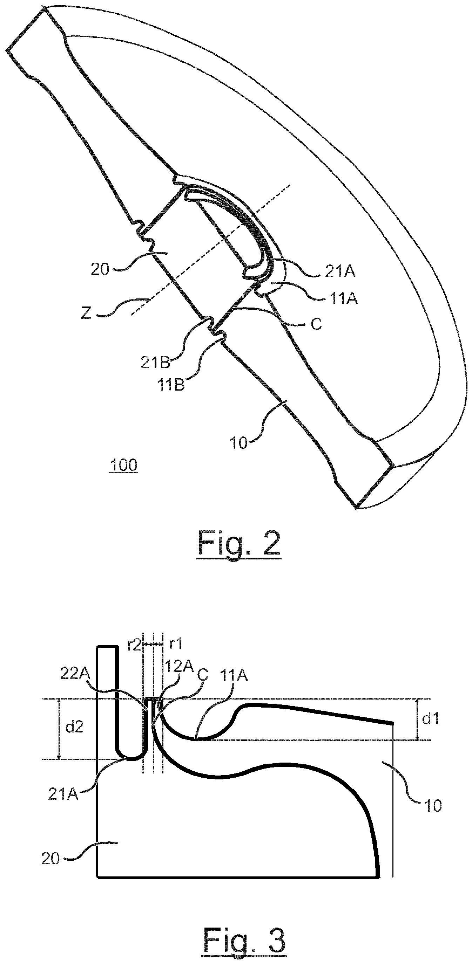

Fig. 1 is a schematic sectional view of a supporting insulator 100 according to an embodiment, and Fig. 2 shows the supporting insulator 100 of Fig. 1 schematically in a perspective illustration. In Figs. 1 and 2, the supporting insulator 100 has substantially the shape of a disc, i. e. a cylindrical shape, and r designates the radial direction. It is noted that the shape of the supporting insulator 100 is not limited to an axially symmetric shape such as a disc. For example, the supporting insulator 100 may have a shape such as a conical shape, a bell-shape or a spherical shape. The supporting insulator 100 is usable e. g. as a barrier insulator in a gas insulated switchgear (not shown), separating a gas volume on side A from a gas volume on side B of the supporting insulator 100.

The supporting insulator 100 comprises an insulator body 10 made of an insulating material, such as epoxy resin, and is manufactured with a casting technique such as, but not limited to, vacuum casting or automated pressure gelation. A cast-in conductor fitting 20 of a conductive material such as aluminum is provided in the insulator body 10 and allows the connection, on both sides A and B, of an external high voltage conductor. The surfaces on side A and side B each define an outer axial surface of the supporting insulator 100. The cast-in conductor fitting 20 and the insulator body 10 are in close contact with each other in a contact area C (i. e., an inter-material interface area of the conductive material of the conductor fitting 20 and the insulating material of the insulator body 10).

The cast-in conductor fitting 20 passes through the insulator body 10 in an axial direction Z of the fitting 20. Note that "axial direction", as used herein, merely defines a pass-through direction of the fitting 20 and does not imply any symmetric configuration of the fitting 20 or of the insulator body 10. For example, in the case of a conical shape or a bell shape, as mentioned above, the supporting insulator 100 need not have any symmetrical configuration in any plane perpendicular to the axis Z. Shapes different from that of a disc are discussed further below.

The insulating material of the insulator body 10 and the conductive material of the conductor fitting 20 (in the present example: epoxy resin and aluminum) have different mechanical properties, specifically regarding their respective coefficients of thermal expansion (CTE). In typical casting processes such as vacuum casting or automated pressure gelation, the epoxy material is cast at elevated temperatures in order to improve the viscosity of the epoxy and speed up the gelation process. Generally, the higher the temperature, the faster the curing process of the epoxy material.

During a post-curing stage, when the temperature is reduced from an elevated (e. g., 100 °C) temperature to ambient temperature (e. g., about 20 °C), a stress (residual stress) is generated in the contact area (the interface) between the aluminum and the epoxy due to a mismatch of the CTEs of these materials. Furthermore, a stress is also generated when the temperature difference in certain use-case scenarios are excessive, such as a temperature range between about -40 °C and about 100° C.

In the supporting insulator of Figs. 1 and 2, a notch 11A is provided in the axial surface on side A of the insulator body 10, and a neighboring notch 21A is provided in the axial surface on side A of the conductor fitting 20. Likewise, a notch 11B is provided in the axial surface on side B of the insulator body 10, and a neighboring notch 21B is provided in the axial surface on side B of the conductor fitting 20.

The notches 11A, 21A form a pair of notches; likewise, the notches 11B, 21B form another pair of notches. As can be seen in Fig. 2, the notches 11A, 21A, 11B, 21B are provided along the entire circumference both in the insulator body 10 and in the conductor fitting 20.

Fig. 3 shows a partial sectional view of a notch region of an exemplary supporting insulator 100, for example the supporting insulator 100 of Figs. 1 and 2. In Fig. 3, for the sake of convenience, only one pair of notches 11A, 21A is illustrated.

Notch 11A in the insulator body 10 has a total depth (the distance from the axial surface in the contact area C between the notches, from which the notch 11A originates, up to its deepest point) denoted d1. d1 is for example, but not limited to, about 2 mm and may be larger. Notch 21A in the conductor fitting 20 has a total depth denoted d2. d2 is for example, but not limited to, about 4 mm and may be larger.

Notch 11A comprises a lip 12A that forms the part that is in contact with neighboring notch 21A. The lip 12A has a width r1, measured from the contact area C up to the shortest distance from the axial surface to a part of the notch 11A having half of the depth (i. e., ½ d1) of notch 11A. r1 is for example, and not limited to, 5 mm, and may be less. Notch 21A comprises a lip 22A that forms the part that is in contact with neighboring notch 11A. The lip 22A has a width r2, measured from the contact area up to the shortest distance from the axial surface to a part of the notch 21A having half of the depth of notch 21A. r2 is for example, and not limited to, 3 mm, and may be less.

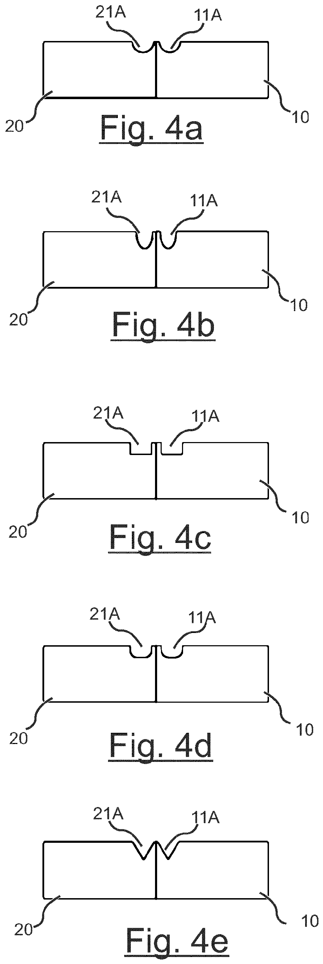

As apparent from the partial sectional views in Figs. 4a-4e, the shape of the notches 11A, 21A, 11B, 21B in the r-Z plane is not limited to that shown in Figs. 1-3. The shapes may be circular (Fig. 4a), oval (Fig. 4b), rectangular (Fig. 4c), rectangular with rounded corners (Fig. 4d), triangular (Fig. 4e), triangular with rounded corners and the like. Also, the shapes, depths and/or distances of neighboring notches 11 A, 21A or 11B, 21B need not necessarily match, and may be different from one another. Moreover, a shape, depth and/or distance need not necessarily be uniform within one notch, e. g., uniform along the entire circumference, and might be variable as well.

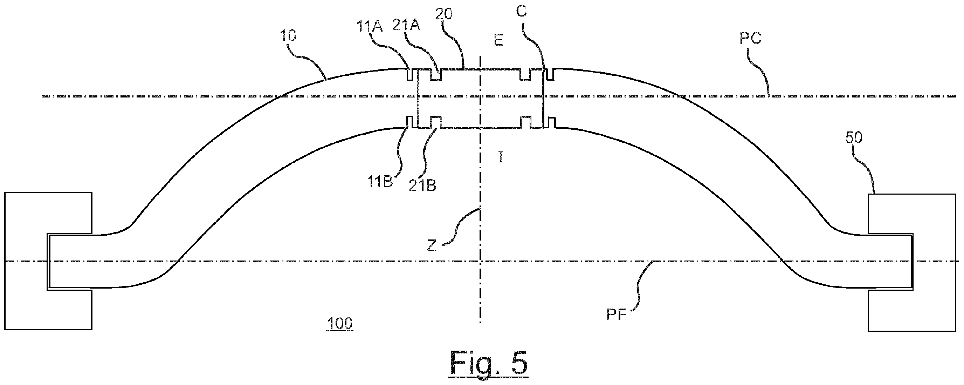

Fig. 5 is a schematic sectional view of a spherical, or bell-shaped, insulator 100 according to an embodiment, comprising insulator body 10 that is curved in the cross-section in Fig. 5, and conductor fitting 20 passed through the insulator body 10, whereby contact area C is formed. In Fig. 5, a fixation flange 50 fixes an end part of the insulator body 50 in a fixation plane PF perpendicular to axis Z of the conductor fitting 20. Conductor fitting 20 is passed through the insulator body 10 in a conductor plane PC perpendicular to axis Z. Conductor plane PC and fixation plane PF do not coincide, i. e. they are separated from each other. Thus, the insulator 100 of Fig. is not symmetric in any plane perpendicular to axis Z. In other words, the conductor fitting 20 protrudes from the fixation plane PF in the direction of axis Z, wherein an axially outer side of the insulator 100 in the protrusion direction is defined as an external side E, and wherein an axially inner side of the insulator 100 in the protrusion direction opposite to the external side E is defined as an internal side I.

In the insulator 100 as shown in Fig. 5, a pair of notches 11A, 21A (a notch 11A in the insulator body 10 in the vicinity of the contact area C and an adjacent notch 21A in the conductor fitting 20 in the vicinity of the contact area C) is provided on the axially outer side E, and another pair of notches 11B, 21B is provided on the axially inner side I.

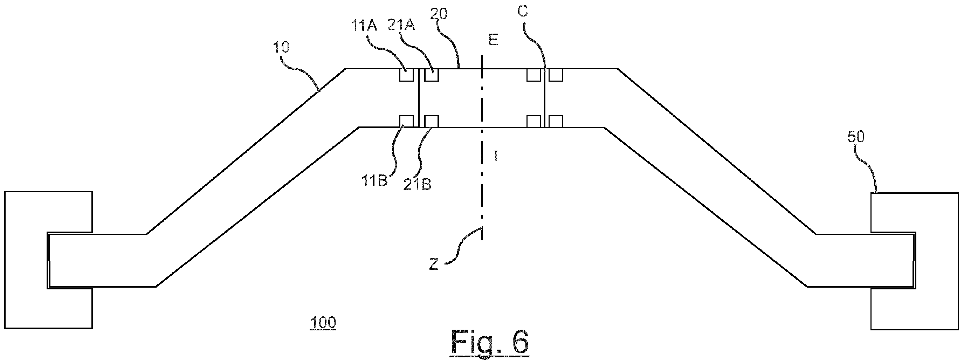

Fig. 6 is a schematic sectional view of a conical insulator 100 according to an embodiment, having a pair of notches each on an axially outer side E and an axially inner side I. The insulator 100 according to Fig. 6 is identical to the insulator 100 according to Fig. 5 except that the insulator body 100 is not curved but inclined from the support flange 50 toward the conductor fitting 20. By the inclination, a conical shape of the insulator 100 is provided. The other features are the same as in Fig. 5. Thus, the description of Fig. 5 is not repeated.

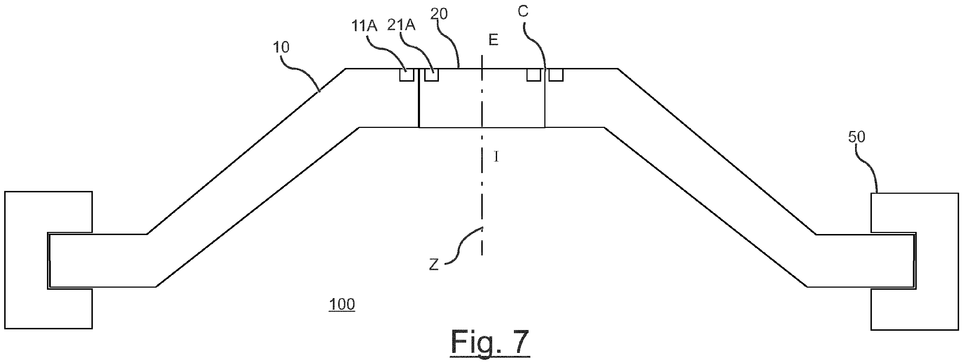

Fig. 7 is a schematic sectional view of a conical insulator 100 according to an embodiment, having a pair of notches 11A, 21A only on an axially outer side E. The shape of the insulator 100 is conical as in Fig. 6. The other features are the same as in Fig. 5 except for the missing notches on the axially inner side I, and are therefore not repeated.

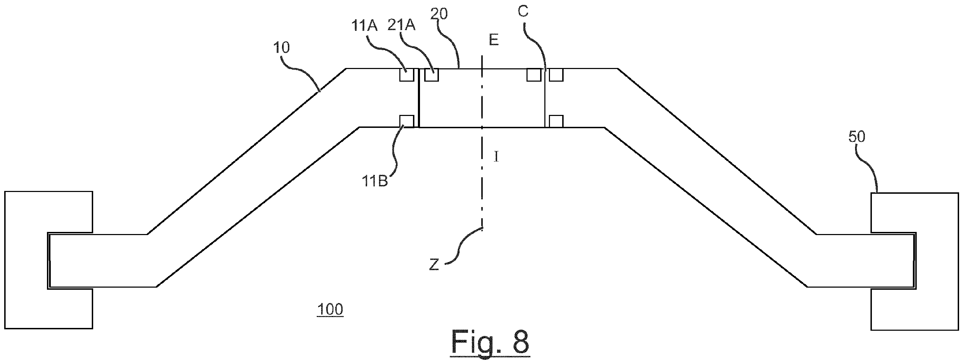

Fig. 8 is a schematic sectional view of a conical insulator 100 according to an embodiment, having a pair of notches 11A, 21A on an axially outer side E, and an un-paired notch 11B in an insulator body 10 on the axially inner side I. The shape of the insulator 100 is conical as in Fig. 6. Un-paired notch 11B has no adjacent notch in the conductor fitting 20 on the axially inner side. The other features are the same as in Fig. 5 and are therefore not repeated.

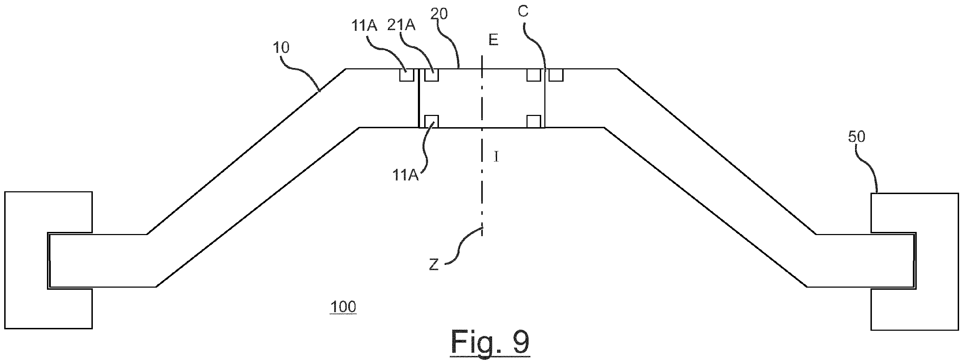

Fig. 9 is a schematic sectional view of a conical insulator 100 according to an embodiment, having a pair of notches 11A, 21A on an axially outer side E, and an un-paired notch 21B in a conductor fitting 20 on the axially inner side. The shape of the insulator 100 is conical as in Fig. 6. Un-paired notch 21B has no adjacent notch in the conductor fitting 20 on the axially inner side. The other features are the same as in Fig. 5 and are therefore not repeated.

Hence, from Figs. 5 through 9 it is apparent that a support insulator 100, or spacer, may have any of the following:
- stress relief notches 11A, 21A on both sides of the contact area C, or interface, on the external side E (any external side) as well as stress relief notches 11B, 21B on both sides of the contact area C on the internal side (any internal side);
- stress relief notches 11A, 21A on both sides of the contact area C on the external side E (any external side) only;
- stress relief notches 11B, 21B on both sides of the contact area C on the internal side I (any internal side) only;
- stress relief notches 11A, 21A on both sides of the contact area C on the external side E (any external side) and one un-paired notch 11B in the insulator body 10 on the internal side I (any internal side);
- stress relief notches 11A, 21A on both sides of the contact area C on the external side E (any external side) and one un-paired notch 21B in the conductor fitting 20 on the internal side I (any internal side);
- stress relief notches 11B, 21B on both sides of the contact area C on the internal side I (any internal side) and one un-paired notch 11A in the insulator body 10 on the external side E (any external side);
- stress relief notches 11B, 21B on both sides of the contact area C on the internal side I (any internal side) and one un-paired notch 21A in the conductor fitting 20 on the external side (any external side).

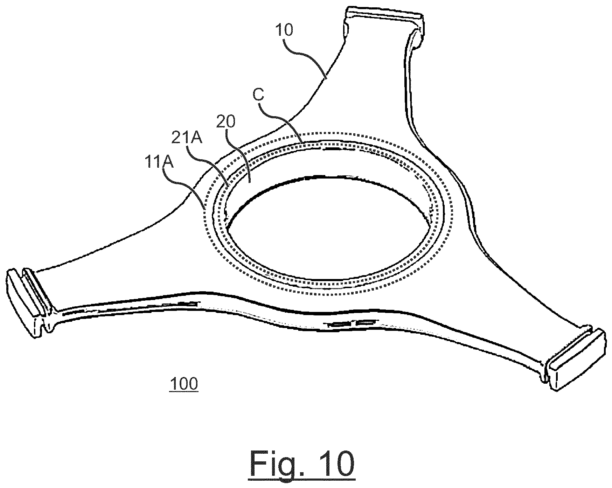

Fig. 10 is a schematic perspective view of a three-leg support insulator 100 for a gas insulated line, the insulator 100 comprising an insulator body 10 and a conductor fitting 20. The insulator 100 in Fig. 10 has three legs which define a distance between the conductor fitting 20 and a support flange (not shown in Fig. 10) of an enclosure part of the gas insulated line (not shown in Fig. 10).

Referring again to any of the embodiments shown in Figs. 1 through 10, it was found in numerical simulations that with the design proposed in the present disclosure, the maximum principal stresses in the contact area can be reduced by about 18%-28% depending on the actual configuration of typical insulator shapes, when comparing a conventional supporting insulator similar to the one described in EP 0 676 842 B1 that has a groove only in the insulator body with the one described herein.

In an actual test case, a temperature cycle test was performed on a conventional supporting insulator similar to the one described in EP 0 676 842 B1, and on a set of nine supporting insulators according to the present disclosure. In the temperature cycle test, the ambient air temperature was changed cyclically, in equal cycles, from 20° C to -40 °C, to 105 °C and back to 20 °C for a total of 9 times in 18 hours.

The conventional supporting insulator showed mechanical failures in the temperature cycle test, such as cracks propagating from the contact area into the insulator body. On the other hand, none of the supporting insulators according to the present disclosure showed any cracks.

Subsequently, four of the supporting insulators according to the present disclosure were subjected to a burst pressure test. By the design of the supporting insulators used, a burst pressure withstanding ability of 17.8 bar over one minute is required. All supporting insulators in the sample achieved this value.

With the aspects, features and embodiments described herein, the stress in a supporting insulator (e. g., a barrier insulator) during temperature cycles as well as burst pressure testing can be reduced, which allows a supporting insulator to withstand temperature cycles without failing, e. g. cracking, and to reach higher pressure values until a maximum burst pressure is exceeded.

The present disclosure has been mainly described with reference to embodiments; however, a person skilled in the art will readily appreciate that other embodiments than the ones described above are part of the present disclosure, wherein the scope is defined by the appended claims.

## Claims

1. A supporting insulator (100) having an insulator body (10) and at least one conductor fitting (20) for applying a high voltage thereto, the conductor fitting (20) passing through the insulator body (10) in an axial direction (Z) whereby a contact area (C) between the insulator body (10) and the conductor fitting (20) is formed;
wherein the insulator body (10) comprises a notch (11A, 11B) abutting on the contact area (C); and
wherein the conductor fitting (20) comprises an adjacent notch (21A, 21B) abutting on the contact area (C).

2. The supporting insulator (100) according to claim 1,
wherein the insulator body (10) is in the form of a disc, a cone or has a bell shape.

3. The supporting insulator (100) according to any one of the preceding claims,
wherein the notch (11A) of the insulator body (10) runs from an axially outer side (E) of the supporting insulator (100) substantially in the axial direction (Z), and wherein the adjacent notch (21A) of the conductor fitting (20) runs from the axially outer side (E) substantially in the axial direction (Z).

4. The supporting insulator (100) according to any one of the preceding claims,
wherein the notch (11B) of the insulator body (10) runs from an axially inner side (I) of the supporting insulator (100) substantially in the axial direction (Z), and wherein the adjacent notch (21B) of the conductor fitting (20) runs from the axially inner side (I) substantially in the axial direction (Z).

5. The supporting insulator (100) according to claim 3 or 4,
further comprising an additional notch (11A, 11B, 21A, 21B) on the respective axial opposite side (E, I) provided either in the insulator body (10) or in the conductor fitting (20).

6. The supporting insulator (100) according to any one of the preceding claims,
wherein the depth (d1, d2) of at least one of the notches (11A, 11B, 21A, 21B) is at least 2 mm, typically at least 3 mm or at least 10 mm.

7. The supporting insulator (100) according to any one of the preceding claims,
wherein at least one of the notches (11A, 11B, 21A, 21B) is arranged at a distance (r1, r2) of 5 mm or less, typically 3 mm or less, from the contact area (C).

8. The supporting insulator (100) according to claim 7,
wherein the notch (11A, 11B, 21A, 21B) arranged at the distance (r1, r2) of 5 mm or less from the contact area (C) has an adjacent notch (11A, 11B, 21A, 21B) that is arranged at a distance (r1, r2) of 5 mm or less from the contact area (C).

9. The supporting insulator (100) according to any one of the preceding claims,
wherein the insulator body (10) comprises a resin such as an epoxy resin.

10. A manufacturing method of a supporting insulator (100), comprising:
providing a casting mold, the casting mold comprising a casting portion to be filled with an insulation material during the casting process, an insertion portion for accommodating a conductor fitting (20) in the casting process and a casting protrusion abutting on the insertion portion;
arranging a conductor fitting (20) in the casting mold, the conductor fitting (20) comprising a notch (21A, 21B) abutting on the casting portion and being arranged such that the notch (21A, 21B) of the conductor fitting is adjacent to the casting protrusion of the casting mold;
filling the casting portion with the insulation material; and
curing the insulation material.
